# EUROPEAN PATENT APPLICATION

(11) **EP 2 995 974 A1**
(43) Date of publication of application: **16.03.2016**
(21) Application number: 14810158.7
(22) Date of filing: 23.05.2014
(51) Int. Cl.: G01S 19/17, G01S 19/12

(54) **A NETWORK-AIDED METHOD, TERMINAL AND NETWORK SIDE DEVICE FOR SATELLITE NAVIGATION AND POSITIONING**

(30) Priority: 13.06.2013 CN 201310233949
(71) Applicant: ZTE Corporation, Shenzhen, Guangdong 518057 (CN)
(72) Inventor: CHU, Li, Shenzhen Guangdong 518057 (CN); HUANG, He, Shenzhen Guangdong 518057 (CN); MA, Zhifeng, Shenzhen Guangdong 518057 (CN)
(74) Representative: Schröer, Gernot H.
(86) International application number: PCT/CN2014/078333
(87) International publication number: WO 2014/198181

(57) **Abstract**

Disclosed are a network-aided method, user equipment, and network side device for satellite navigation and positioning, related to the field of satellite navigation and positioning. The network-aided satellite navigation and positioning method includes: a user equipment sending a network side an auxiliary positioning information request containing an indication of providing ionospheric auxiliary information (A100); the user equipment receiving ionospheric auxiliary information fed back from the network side, and correspondingly performing the ionospheric time delay correction to carry out a positioning operation (A200). The abovementioned technical solution allows a mobile communication network to transmit targeted ionospheric information to the user equipment in a network-aided satellite positioning process, thereby improving the positioning precision. Meanwhile, the abovementioned technical solution saves resources, speeds up the user equipment to lock effective information and finally achieves positioning. The technical solution is not limited to Bei Dou satellite positioning scenarios but can also be applied to other satellite navigation and positioning scenarios.

## Description

### Technical Field

The present invention relates to the field of satellite navigation and positioning, and more particularly, to a network-aided satellite navigation and positioning scheme.

### Background of the Related Art

The satellite navigation system is an important spatial information infrastructure and has been widely applied in mapping, telecommunications, water conservancy, fishery, transportation, forest fire prevention, disaster relief, public safety, military and many other areas, and it is closely related to national security. The Bei Dou Navigation Satellite System, for example, is a global satellite navigation system that is being independently developed and operated by China. The system is dedicated to providing global users with high-quality positioning, navigation and timing service, including open service and authorized service. The open service provides the positioning, velocity measurement and timing service for free all over the world, and the positioning precision is 10 meters, the velocity measurement precision is 0.2 m/sec, and the timing precision is 10 nanoseconds. The authorized service provides users having high-precision and high-reliable satellite navigation needs with positioning, velocity measurement, time and communication service as well as system integrity information. The Bei Dou satellite navigation system is composed of space segment, ground segment and user segment, wherein the space segment comprises five geostationary-orbit satellites and 30 non-geostationary-orbit satellites, and the ground segment comprises a number of ground stations such as a main control station, an injection station and a monitoring station, and the user segment comprises Bei Dou user equipments and user equipments compatible with other satellite navigation systems.

There are many factors affecting the satellite positioning precision, such as satellite orbit error and ionospheric error, etc., only when the precision of satellite orbit is very high and also necessary corrections can be performed on error effects, such as the ionospheric error, contained in the observations, can the positioning precision be effectively increased. Currently, navigation satellite systems, such as GPS and Galileo, broadcast the ionospheric delay correction parameter in the navigation message for ionospheric time delay correction, namely the key parameter in the Klobuchar model. However, since the ionosphere varies at different latitudes and in different geographical environments, this model is only applicable to some areas. How to increase the ionospheric error correction precision is a key issue to increase the final positioning precision.

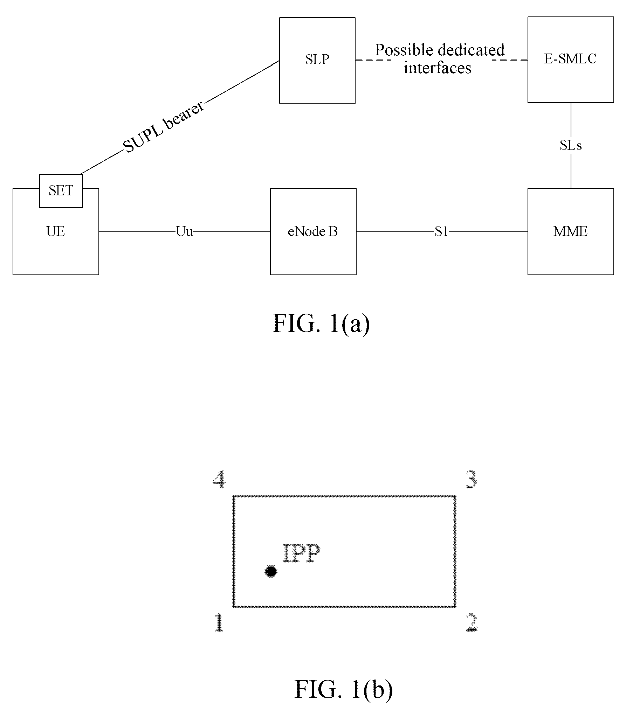

The network-aided satellite positioning uses resources at the mobile communication network side based on the satellite navigation system to help a positioning user equipment perform a quick positioning, and taking the LTE system for example, as shown in FIG. 1 (a), the mobility management entity (MME) receives a positioning request from a user equipment (UE) or an evolved NodeB (eNB), sends a positioning service request to an Enhanced Serving Mobile Location Centre (E-SMLC); the E-SMLC processes the positioning request, including sending positioning auxiliary information to the user equipment, and also including positioning the target user equipment. The SUPL Location Platform (SLP) is the entity responsible for secure user plane location (SUPL). The related art only supports Klobuchar and NeQuick models, and in order to improve the positioning precision, on this basis, it is necessary to introduce a network-aided ionospheric parameter optimization method or model suitable for the Bei Dou system. The Bei Dou navigation messages are divided into D1 navigation messages and D2 navigation messages according to the rate and structure. Wherein, the D2 navigation message comprises basic navigation information and enhanced service information (differential and integrity information of the Bei Dou system and grid-point ionospheric information). The ionospheric grid coverage is east longitude 70-145 degrees and north latitude 7.5-55 degrees and is divided into 320 grid points. Users can choose effective grid-point data adjacent to or close to the pierce point, design a model themselves, and interpolate the number of observed ionospheric corrections at the satellite pierce point. Each grid-point ionospheric information comprises the ionospheric grid-point vertical delay and the ionospheric grid-point vertical delay error index, occupying 13 bits, and all the information is a total of 13*320 bits, which is resource demanding. As shown in FIG. 1 (b), wherein the ionospheric pierce point (IPP) is the geographic location of the ionospheric pierce point corresponding to the connected link between the user receiver and a certain satellite. Because the user equipment only notifies the network side which kind of the ionosphere models are supported, the network side cannot carefully judge what ionospheric information is really needed by the user equipment. If all the ionospheric auxiliary information is sent to the user equipment, it will cause a lot of waste of air interface resources and also increase the time for the user equipment locking the effective information.

### Summary of the Invention

To solve the technical problem, the embodiment of the present invention is to provide a network-aided method, user equipment, network side device for satellite navigation and positioning, to make a mobile communication network transfer targeted ionospheric information to a user equipment in a network-aided satellite positioning process.

In order to solve the abovementioned technical problem, the following technical solution is used:
a network-aided satellite navigation and positioning method comprises the following steps:
   a user equipment sending an auxiliary positioning information request to a network side, wherein the auxiliary positioning information request carries an indication of providing ionospheric auxiliary information;
   the user equipment receiving the ionospheric auxiliary information fed back by the network side, performing a corresponding ionospheric time delay correction to realize a positioning operation.

Alternatively, the indication of providing ionospheric auxiliary information comprises one or two kinds of the following information:
indication information that requires to carry ionospheric auxiliary information;
a range of ionospheric auxiliary information which needs to be carried.

Alternatively, the range of ionospheric auxiliary information comprises any one or more kinds of the following information:
ionospheric model category;
all or part of ionospheric information;
general ionospheric information or enhanced ionospheric information;
general-precision auxiliary information or high-precision auxiliary information;
national or regional information;
a latitude and longitude start-end range of a grid or grid-point serial numbers.

Alternatively, the precision of the general-precision auxiliary information or the high-precision auxiliary information is distinguished via the precision of ionospheric model, wherein different ionospheric models have different precisions for time delay corrections; or
distinguished via a parameter granularity, wherein in the same category of ionospheric parameters, part of parameters work as low-precision auxiliary information, and part of parameters work as high-precision auxiliary information.

Alternatively, the ionospheric model category comprises at least one of the following categories:
Klobuchar model, NeQuick model, enhanced model;
wherein, the enhanced model refers to a model modified on the basis of an existing ionospheric model and enhanced on time delay correction precision, geographical applicability or effect.

Alternatively, the method further comprises:
after receiving the auxiliary positioning information request, the network side sending the user equipment an auxiliary positioning information response carrying the ionospheric auxiliary information according to the indication of providing ionospheric auxiliary information therein.

Alternatively, the method further comprises:
after receiving the auxiliary positioning information request message and determining that at least one of the following conditions are met, the network side sending the auxiliary positioning information response to the user equipment:
   the user who initiates the auxiliary positioning information request having a permission for using the ionospheric information;
   the region where the user initiating the auxiliary positioning information request is located providing ionospheric information;
   the region where the user initiating the auxiliary positioning information request is located providing high-precision ionospheric information;
   the region where the user initiating the auxiliary positioning information request is located providing low-precision ionospheric information.

Alternatively, the method further comprises:
after receiving the auxiliary positioning information request message and determining that the user requesting for the auxiliary positioning information does not have a permission for using the ionospheric information or the region where the user is located does not provide the ionospheric information, the network side sending a failure response to the user equipment.

Alternatively, the failure response carries reasons for the failure.

Alternatively, the step of the network side sending the user equipment an auxiliary positioning information response carrying the ionospheric auxiliary information comprises:
according to one or more kinds of the following information, the network side determining the ionospheric auxiliary information that needs to be sent to the user equipment: a user permission of the user equipment, geographic information of the user equipment, a range of the ionospheric auxiliary information, positioning capability supported by the user equipment and history information of user ionospheric parameters saved by the network side;
the network side feeding back an auxiliary positioning information response carrying the determined ionospheric auxiliary information to the user equipment.

Alternatively, the step of the network side determining the ionospheric auxiliary information that needs to be sent to the user equipment comprises:
when the range of the ionospheric auxiliary information is a part of the ionospheric information, the network side determining that the ionospheric auxiliary information which needs to be sent to the user equipment only comprises a high-precision part of the ionospheric information.

Alternatively, the ionospheric auxiliary information comprises grid ionospheric correction information.

Alternatively, before the network side sends the user equipment an auxiliary positioning information response carrying the ionospheric auxiliary information, it further comprises:
the network side obtaining the ionospheric auxiliary information through one of the following ways:
   through configuration;
   through a ground station in a connected satellite navigation system;
   through a satellite navigation message information received by the network side;
   through other devices in the network.

A network-aided satellite navigation and positioning method comprises:
a network side receiving an auxiliary positioning information request, and according to an indication of providing ionospheric auxiliary information in the auxiliary positioning information request, sending an auxiliary positioning information response to a user equipment initiating the auxiliary positioning information request, wherein the auxiliary positioning information response carries ionospheric auxiliary information.

Alternatively, the method further comprises:
after receiving the auxiliary positioning information request and determining that the user equipment initiating the auxiliary positioning information request meets one of the following conditions or a combination of multiple conditions, the network side sending an auxiliary positioning information response to the user equipment:
   a user who initiates the auxiliary positioning information request having a permission for using ionospheric information;
   a region where the user initiating the auxiliary positioning information request is located providing the ionospheric information;
   the region where the user initiating the auxiliary positioning information request is located providing high-precision ionospheric information;
   the region where the user initiating the auxiliary positioning information request is located providing low-precision ionospheric information.

Alternatively, the method further comprises:
after receiving the auxiliary positioning information request message and determining that the user requesting for the auxiliary positioning information does not have the permission for using the ionospheric information or the region where the user is located does not provide the ionospheric information, the network side sending a failure response to the user equipment.

Alternatively, the failure response carries reasons for the failure.

Alternatively, the step of the network side sending an auxiliary positioning information response to the user equipment that initiates the auxiliary positioning information request comprises:
according to one or more kinds of the following information, the network side determining the ionospheric auxiliary information that needs to be sent to the user equipment:
   a user permission of the user equipment, geographic information of the user equipment, a range of the ionospheric auxiliary information, a positioning capability supported by the user equipment and history information of user ionospheric parameters saved at the network side.

Alternatively, the step of the network side determining the ionospheric auxiliary information that needs to be sent to the user equipment comprises:
when the range of ionospheric auxiliary information is a part of ionospheric information, the network side determining that the ionospheric auxiliary information that needs to be sent to the user equipment only comprises a high-precision part of the ionospheric information.

Alternatively, the ionospheric auxiliary information comprises grid ionospheric correction information.

Alternatively, before the network side sends the user equipment an auxiliary positioning information response carrying the ionospheric auxiliary information, it further comprises:
the network side obtaining the ionospheric auxiliary information through one of the following ways:
   through configuration;
   through a ground station in a connected satellite navigation system;
   through satellite navigation message information received by the network side;
   through other devices in the network

A user equipment comprises a first unit and a second unit, wherein:
the first unit is configured to: send an auxiliary positioning information request to a network side, wherein the auxiliary positioning information request carries an indication of providing ionospheric auxiliary information;
the second unit is configured to: receive the ionospheric auxiliary information fed back by the network side, perform a corresponding ionospheric time delay correction to achieve a positioning operation.

Alternatively, the indication of providing the ionospheric auxiliary information comprises one or two kinds of the following information:
indication information that requires to carry the ionospheric auxiliary information;
a range of ionospheric auxiliary information that needs to be carried.

Alternatively, the range of ionospheric auxiliary information comprises any one or more kinds of the following information:
ionospheric model category;
all or part of ionospheric information;
general ionospheric information or enhanced ionospheric information;
general-precision auxiliary information or high-precision auxiliary information;
national or regional information;
a latitude and longitude start-end range of a grid or grid-point serial numbers.

Alternatively, a precision of the general-precision auxiliary information or the high-precision auxiliary information is distinguished via the precision of the ionospheric model, wherein different ionospheric models have different precisions for time delay correction; or
distinguished through a parameter granularity, wherein in the same category of ionospheric parameters, part of parameters work as low-precision auxiliary information and part of parameters work as high-precision auxiliary information.

Alternatively, the ionospheric model category comprises at least one of the following categories:
Klobuchar model, NeQuick model, enhanced model;
wherein the enhanced model refers to a model modified on the basis of an existing ionospheric model and enhanced on time delay correction precision, geographical applicability or effect.

A network-side device comprises a first unit and a second unit, wherein:
the first unit is configured to: receive an auxiliary positioning information request initiated by a user equipment;
the second unit is configured to: according to an indication of providing the ionospheric auxiliary information carried in the auxiliary positioning information request, send the user equipment an auxiliary positioning information response carrying the ionospheric auxiliary information.

Alternatively, the second unit is further configured to:
when determining that any of the following conditions or a combination of several conditions is met, send an auxiliary positioning information response to the user equipment:
   a user who initiates the auxiliary positioning information request having a permission for using ionospheric information;
   a region where the user initiating the auxiliary positioning information request is located provides the ionospheric information;
   the region where the user initiating the auxiliary positioning information request is located providing high-precision ionospheric information;
   the region where the user initiating the auxiliary positioning information request is located providing low-precision ionospheric information.

Alternatively, the second unit is further configured to:
when determining that a user requesting for the auxiliary positioning information does not have the permission for using the ionospheric information or the region where the user is located does not provide the ionospheric information, send a failure response to the user equipment.

Alternatively, the second unit is configured to: according to one or more kinds of the following information, determine the ionospheric auxiliary information that needs to be sent to the user equipment:
a user permission of the user equipment, geographic information of the user equipment, a range of ionospheric auxiliary information, a positioning capability supported by the user equipment and history information of user ionospheric parameters saved at the network side.

Alternatively, the second unit is configured to:
when the range of ionospheric auxiliary information is a part of the ionospheric information, determine that the ionospheric auxiliary information that needs to be sent to the user equipment only comprises a high-precision part of the ionospheric information.

Alternatively, the second unit is configured to obtain the ionospheric auxiliary information through one of the following ways:
through configuration;
through a ground station in a connected satellite navigation system;
through satellite navigation message information received by the second unit;
through other devices in the network.

The abovementioned technical solution enables the mobile communication network to transfer targeted ionospheric information to the user equipment in a network-aided satellite positioning process, thereby improving the positioning precision. Meanwhile, the abovementioned technical solution saves resources, speeds up the user equipment to lock effective information and finally perform the positioning. The abovementioned technical solution is not limited to Bei Dou satellite positioning scenarios, it can also be applied to other satellite navigation and positioning scenarios.

### Brief Description of Drawings

FIG. 1 (a) is an architectural diagram of the mobile network-aided user equipment positioning in the related art;
FIG. 1 (b) is a schematic diagram of a user pierce point and grid points in the related art;
FIG. 2 (a) is a flow chart of the network-aided satellite navigation and positioning method in accordance with a first embodiment of the present invention;
FIG. 2 (b) is a flow chart of the network-aided satellite navigation and positioning method in accordance with a second embodiment of the present invention;
FIG. 3 is a flow chart of the network-aided satellite navigation and positioning method in a scenario in which a user equipment requests for ionospheric auxiliary information and a network side agrees and sends the information in accordance with a third embodiment of the present invention;
FIG. 4 is a flow chart of the network-aided satellite navigation and positioning method in a scenario in which the user equipment requests for ionospheric auxiliary information and the network side finds out that the user equipment has a limited permission and sends the low-precision information in accordance with a fourth embodiment of the present invention;
FIG. 5 is a flow chart of the network-aided satellite navigation and positioning method in a scenario in which the user equipment requests for ionospheric auxiliary information and the network side finds out that the user equipment has a limited permission and rejects sending the ionospheric information in accordance with a fifth embodiment of the present invention;
FIG. 6 is a flow chart of the network-aided satellite navigation and positioning method in a scenario in which the user equipment requests for ionospheric auxiliary information and the network side sends information applicable to the user with combination of the locally saved information in accordance with a sixth embodiment of the present invention.

### Preferred Embodiments of the Invention

Hereinafter, in conjunction with the following drawings, the technical solution of the present invention will be described in further detail. It should be noted that in the case of no conflict, embodiments and features in the embodiments of the present application can be arbitrarily combined with each other.

### The first embodiment

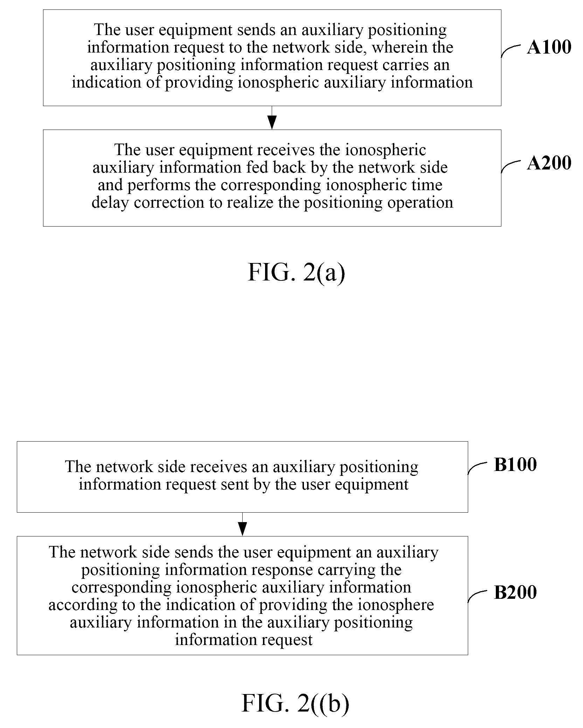

The present embodiment provides a network-aided satellite navigation and positioning method, which is described mainly from the user equipment side, and the implementation process of the method is shown in FIG. 2 (a), comprising the following steps:
in step A100: the user equipment sends an auxiliary positioning information request to the network side, wherein the auxiliary positioning information request carries an indication of providing ionospheric auxiliary information;
in this step, the indication of providing ionospheric auxiliary information comprises one or two kinds of the following information:
   an indication that requires to carry ionospheric auxiliary information;
   a range of ionospheric auxiliary information which needs to be carried.

Alternatively, the abovementioned indication of providing ionospheric auxiliary information can be an indication of providing grid ionospheric auxiliary information, and correspondingly, the indication of providing grid ionospheric auxiliary information comprises one or two kinds of the following information:
an indication that requires to carry grid ionospheric auxiliary information;
a range of grid ionospheric auxiliary information which needs to be carried.

The range of ionospheric auxiliary information at least comprises one or more kinds of the following information:
ionospheric model category;
all or part of ionospheric information;
general ionospheric information or enhanced ionospheric information;
general-precision auxiliary information or high-precision auxiliary information;
national or regional information;
a latitude and longitude start-end range of a grid or grid-point serial numbers.

Wherein, the precision of the general-precision or high-precision auxiliary information is distinguished via the precision of the ionospheric model, and different ionospheric models have different precisions for time delay correction; or it is distinguished via a parameter granularity, namely in the same category of ionospheric information, part of parameters work as low-precision auxiliary information and have the relatively lower ionospheric time delay correction precision; and part of parameters work as high-precision auxiliary information and have the relatively higher ionospheric time delay correction precision.

Alternatively, the ionospheric model comprises at least one of the following:
Klobuchar model, NeQuick model and enhanced model;
wherein, the enhanced model refers to a model modified on the basis of an existing ionospheric model and enhanced on time delay correction precision, geographical applicability or effect. Preferably, the enhanced model is the grid ionosphere.

In step A200: the user equipment receives the grid ionospheric auxiliary information fed back by the network side and performs the corresponding ionospheric time delay correction to realize the positioning operation.

It further comprises operations of the network side on the basis of the abovementioned process.

After receiving the auxiliary positioning information request, the network side sends the user equipment an auxiliary positioning information response carrying the ionospheric auxiliary information according to the indication of requiring to provide ionospheric auxiliary information therein.

It should be noted that, after receiving the auxiliary positioning information request message, the network side needs to judge whether the user meets the following conditions or not, and only when the user meets at least one of the conditions or a combination of several conditions, does the network side send the auxiliary positioning information response to the user equipment:
the user who initiates the auxiliary positioning information request having a permission for using the ionospheric information;
the region where the user initiating the auxiliary positioning information request is located providing ionospheric information;
the region where the user initiating the auxiliary positioning information request is located providing high-precision ionospheric information;
the region where the user initiating the auxiliary positioning information request is located providing low-precision ionospheric information.

However, when the user does not meet any of the abovementioned conditions, that is, the user does not have a permission for using the ionospheric information or the region where the user is located does not provide the ionospheric information, it is to send a failure response to the user equipment. Alternatively, the failure response carries reasons for the failure.

Alternatively, the network side determines the ionospheric auxiliary information that needs to be sent to the user equipment according to one or more kinds of the following information:
a user permission of the user equipment, geographic information of the user equipment, a range of the ionospheric auxiliary information, a positioning capability supported by the user equipment and history information of user ionospheric parameters saved by the network side;
wherein, when the range of the ionospheric auxiliary information is a part of the ionospheric information, the network side only sends the high-precision part of the corresponding ionospheric information to the user equipment.

In detail, the network side determines to send the corresponding low-precision or high-precision ionospheric information to the user initiating the auxiliary positioning information request according to the user permission of the user equipment, the geographic information of the user equipment, and the history information of the user ionospheric parameters saved at the network side.

The network side may also determine to send the high-precision part of the ionospheric information corresponding to the area where the user is located to the user initiating the auxiliary positioning information request according to the user permission of the user equipment, the geographic information of the user equipment and the latitude and longitude start-end range of the grid or grid-point serial numbers.

And the ionospheric auxiliary information sent by the network side to the user equipment can be obtained through one of the following ways:
through configuration;
through a ground station in a connected satellite navigation system;
through the satellite navigation message information received by the network side;
through other devices in the network.

In the present embodiment, the network side comprises but not limited to the following modes: GERAN (GSM edge radio access network), UMTS (Universal Mobile Telecommunications System), LTE (Long Term Evolution), CDMA (Wideband Code Division Multiple Access).

It should be noted that, the ionospheric auxiliary information fed back by the network side comprises at least the grid ionospheric correction information.

### The second embodiment

The present embodiment provides a network-aided satellite navigation and positioning method, which is described mainly from the network side, and the implementation process of the method is shown as FIG. 2 (b), comprising the following steps:
in step B100, the network side receives an auxiliary positioning information request sent by the user equipment;
in step B200, the network side sends the user equipment an auxiliary positioning information response carrying the corresponding ionospheric auxiliary information according to the indication of providing the ionospheric auxiliary information in the auxiliary positioning information request.

In this step, the network side determines the ionospheric auxiliary information that needs to be carried in the auxiliary positioning information response sent to the user equipment according to one or more kinds of the following information:
a user permission of the user equipment, geographic information of the user equipment, a range of the ionospheric auxiliary information, a positioning capability supported by the user equipment and history information of user ionospheric parameters saved by the network side;
wherein, when the range of the ionospheric auxiliary information is a part of the ionospheric information, the network side only sends the high-precision part of the corresponding ionospheric information.

And the ionospheric auxiliary information sent by the network side can be obtained through one of the following ways:
through configuration;
through a ground station in a connected satellite navigation system;
through satellite navigation message information received by the network side;
through other devices in the network.

In the present embodiment, the network side comprises but not limited to the following modes:
GERAN, UMTS, LTE and CDMA.

Moreover, preferred schemes are proposed on the basis of the abovementioned process, and after receiving the auxiliary positioning information request message, the network side needs to judge whether the user meets the following conditions or not, and only when the user meets at least any one of the conditions or a combination of several conditions, does the network side send the user equipment an auxiliary positioning information response carrying the corresponding ionospheric auxiliary information:
the user who initiates the auxiliary positioning information request having a permission for using the ionospheric information;
the area where the user initiating the auxiliary positioning information request is located providing ionospheric information;
the area where the user initiating the auxiliary positioning information request is located providing high-precision ionospheric information;
the area where the user initiating the auxiliary positioning information request is located providing low-precision ionospheric information.

However, when the user does not meet any of the abovementioned conditions, that is, the user does not have a permission for using the ionospheric information or the area where the user is located does not provide the ionospheric information, it is to send a failure response to the user equipment. Alternatively, the failure response carries reasons for the failure.

Alternatively, when sending the auxiliary positioning information response carrying the corresponding ionospheric information, the network side determines to send the corresponding low-precision or high-precision ionospheric information to the user initiating the auxiliary positioning information request according to the user permission of the user equipment, the geographic information of the user equipment and the history information of user ionospheric parameters saved by the network side;
the network side may also determine to send the high-precision part of the ionospheric information corresponding to the area where the user is located to the user initiating the auxiliary positioning information request according to the user permission of the user equipment, the geographic information of the user equipment and the latitude and longitude start-end range of the grid or the grid-point serial numbers.

It should be pointed out that, the indication of providing ionospheric auxiliary information in the auxiliary positioning information request specifically may be an indication of providing the grid ionospheric auxiliary information. Accordingly, the ionospheric auxiliary information fed back by the network side to the user equipment comprises the grid ionospheric correction information.

### The third embodiment

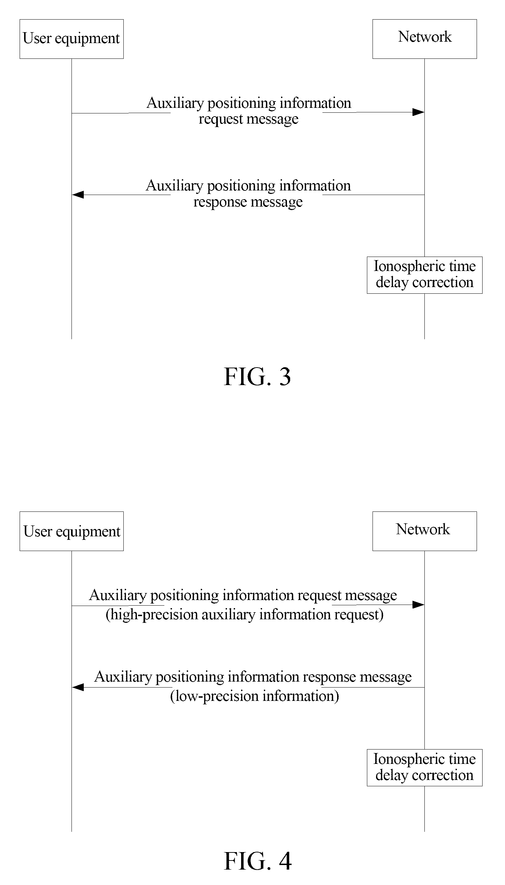

The present embodiment assumes that the user equipment requests for the ionospheric auxiliary information, and the network side agrees and sends the information, and in this scenario, the network-aided satellite navigation and positioning method, as shown in FIG. 3, comprises the steps 301-303.

In step 301, during the network-aided satellite positioning, the user equipment sends an auxiliary positioning information request message to the network.

The abovementioned auxiliary positioning information request message comprises an indication of providing ionospheric auxiliary information (i.e., indication information of requesting to carry the ionospheric information, and/or a range of ionospheric auxiliary information that needs to be carried), wherein, the range of the ionospheric auxiliary information carried by the user equipment comprises one or more kinds of the following:
ionospheric model category;
all or part of the ionospheric information;
general ionospheric information or enhanced ionospheric information;
general-precision auxiliary information or high-precision auxiliary information;
national or regional information;
a latitude and longitude start-end range of a grid or grid-point serial numbers.

Wherein, the ionospheric model comprises but not limited to the following ionospheric models:
KLOBUCHAR model, NeQuick model, and enhanced model (such as a model carrying the grid ionospheric correction information).

In specific applications, the indication of providing the ionospheric auxiliary information in the auxiliary positioning information request message can be an indication of providing the grid ionospheric auxiliary information.

In step 302, after receiving the abovementioned auxiliary positioning information request message, the network side sends the user equipment an auxiliary positioning information response message that comprises the corresponding ionospheric information.

Wherein, the network side determines the corresponding ionospheric auxiliary information that needs to be sent to the user equipment according to one or more kinds of the following information:
a user permission of the user equipment (for example: the network side judges whether to send the high-precision auxiliary information or not according to the high-level or low-level of user);
geographic information of the user equipment (nation, region, operator, location tracking area, serving base station or serving cell, etc.);
ionospheric model category (sending ionospheric parameters of the corresponding model according to the ionospheric model category);
all or part of the ionospheric information; for example, if it is part, it only sends the high-precision part of the corresponding ionospheric information;
general ionospheric information or enhanced ionospheric information;
positioning capability (i.e., GPS, SBAS, QZSS, Galileo, GLONASS, Beidou) supported by the user equipment;
history information of user ionospheric parameters saved by the network side.

Alternatively, in the abovementioned step 302, the network side may send the high-precision part of the ionospheric information corresponding to the area according to the user permission of the user equipment, the geographic information of the user equipment and the latitude and longitude start-end range of the grid or the grid-point serial numbers.

In specific applications, the ionospheric auxiliary information fed back by the network side to the user equipment can comprise the grid ionospheric correction information.

In step 303, after receiving the abovementioned ionospheric auxiliary information, the user equipment performs an ionospheric time delay correction to realize the positioning operation.

### The fourth embodiment

The present embodiment assumes that the user equipment requests for the ionospheric auxiliary information, and the network side finds out that the user equipment has a limited permission and sends the low-precision information, in this scenario, the network-aided satellite navigation and positioning method, as shown in FIG. 4, comprises the steps 401-403.

In step 401, during the network-aided satellite positioning, the user equipment sends an auxiliary positioning information request message to the network.

The auxiliary positioning information request message comprises an indication of providing ionospheric auxiliary information (i.e., indication information of requesting to carry the ionospheric information, and/or a range of grid ionospheric auxiliary information that needs to be carried).

Wherein, the range of the ionospheric auxiliary information carried by the user equipment comprises the high-precision auxiliary information request.

In specific applications, the indication of providing the ionospheric auxiliary information in the abovementioned auxiliary positioning information request message can be an indication of providing the grid ionospheric auxiliary information. In step 402, after receiving the abovementioned auxiliary positioning information request message, the network side sends the user equipment an auxiliary positioning information response message that comprises the low-precision information of the ionospheric information corresponding to the area when the network side determines that the user does not have the permission for high-precision information or the area does not provide the high-precision information according to the user permission of the user equipment, the geographical information of the user equipment or the latitude and longitude start-end range of a grid or grid-point serial numbers.

Wherein, the network side determines the corresponding ionospheric auxiliary information that needs to be sent to the user equipment according to one or more kinds of the following information:
a user permission of the user equipment (for example: the network side judges whether to send the high-precision auxiliary information or not according to the high-level or low-level of user);
geographic information of the user equipment (nation, region, operator, location tracking area, serving base station or serving cell, etc.);
ionospheric model category (send ionospheric parameters of the corresponding model according to the ionospheric model category);
all or part of the ionospheric information;
general ionospheric information or enhanced ionospheric information;
positioning capability (i.e., GPS, SBAS, QZSS, Galileo, GLONASS, Beidou) supported by the user equipment;
history information of user ionospheric parameters saved by the network side.

In specific applications, the ionospheric auxiliary information fed back by the network side to the user equipment may comprise the grid ionospheric correction information.

Wherein, the ionospheric auxiliary information sent by the network side to the user equipment can be obtained through at least one of the following ways:
through configuration (background or network management configuration);
through a ground station in a connected satellite navigation system;
through satellite navigation message information received by the network side;
through other devices in the network (such as other adjacent base stations or devices which have already obtained the ionospheric information);
in step 403, after receiving the abovementioned ionospheric auxiliary information, the user equipment performs a corresponding ionospheric time delay correction to realize the positioning operation.

### The fifth embodiment

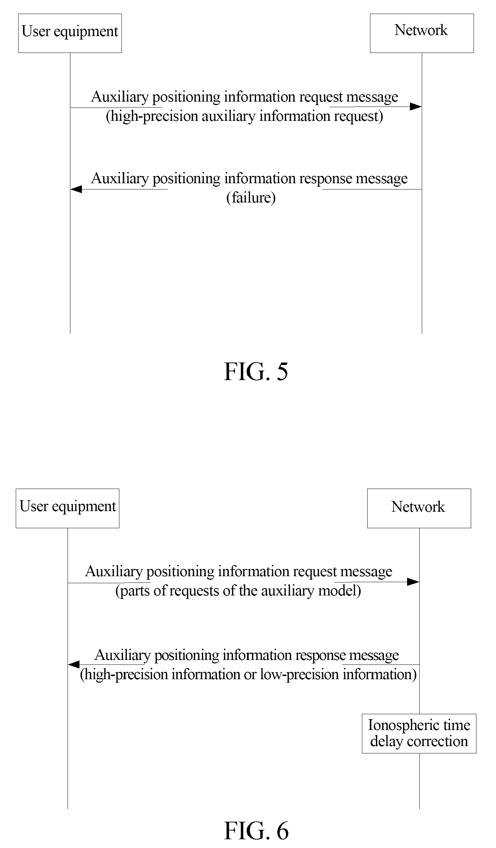

The present embodiment assumes that the user equipment requests for the ionospheric auxiliary information, and the network side finds out that the user equipment has a limited permission and rejects sending the ionospheric information, and in this scenario, the network-aided satellite navigation method, as shown in FIG. 5, comprises the following steps 501-503.

In step 501, during the network-aided satellite positioning, the user equipment sends an auxiliary positioning information request message to the network.

The auxiliary positioning information request message comprises an indication of providing ionospheric auxiliary information (i.e., indication information of requesting to carry the ionospheric information, and/or a range of ionospheric auxiliary information that needs to be carried).

Wherein, the range of the ionospheric auxiliary information carried by the user equipment comprises one or more kinds of the following:
ionospheric model category;
all or part of the ionospheric information;
general ionospheric information or enhanced ionospheric information;
general-precision auxiliary information or high-precision auxiliary information;
national or regional information;
a latitude and longitude start-end range of grid or grid-point serial numbers.

Wherein, the ionospheric model comprises but not limited to the following ionospheric models:
KLOBUCHAR model, NeQuick model, and enhanced model.

In specific applications, the indication of providing the ionospheric auxiliary information in the abovementioned auxiliary positioning information request message can be an indication of providing the grid ionospheric auxiliary information.

In step 502, after receiving the abovementioned auxiliary positioning information request message, the network side sends the user equipment a failure response when the network side determines that the user does not have the permission for using the ionospheric information or the region does not provide the ionospheric information according to the user permission of the user equipment, the geographical information of the user equipment or the latitude and longitude start-end range of grid or grid-point serial numbers. Alternatively, the failure response also comprises the abovementioned corresponding failure reasons.

### The sixth embodiment

The present embodiment assumes that the user equipment requests for the ionospheric auxiliary information, and the network side sends information applicable to the user with combination of the locally stored information, and in this scenario, the network-aided satellite navigation method, as shown in FIG. 6, comprises the following steps 601-603.

In step 601, during the network-aided satellite positioning, the user equipment sends an auxiliary positioning information request message to the network.

The abovementioned auxiliary positioning information request message comprises an indication of providing ionospheric auxiliary information (i.e., indication information of requesting to carry the ionospheric auxiliary information, and/or a range of ionospheric auxiliary information that needs to be carried).

Wherein, the range of the ionospheric auxiliary information carried by the user equipment comprises parts of requests of the ionospheric auxiliary information.

In specific applications, the indication of providing the ionospheric auxiliary information in the abovementioned auxiliary positioning information request message can be an indication of providing the grid ionospheric auxiliary information. In step 602, after receiving the abovementioned auxiliary positioning information request message, the network sends the user equipment an auxiliary positioning information response message which comprises the low-precision information of the corresponding ionosphere according to the user permission of the user equipment, the geographical information of the user equipment or the history information of user ionospheric parameters saved by the network side.

It should be pointed out that, if the network side determines that the high-precision information should be sent, the response message comprises the high-precision part of the corresponding ionospheric information.

Alternatively, when the network side sends the precision information in the response message, the precision can be distinguished via the precision of the ionospheric model, wherein different ionospheric models have different precisions; or distinguished via a parameter granularity, wherein in the same category of ionospheric information, part of parameters work as low-precision auxiliary information and have a relatively lower ionospheric time delay correction precision; part of parameters work as high-precision auxiliary information and have a relatively higher ionospheric time delay correction precision.

In specific applications, the ionospheric auxiliary information fed back by the network side to the user equipment may comprise the grid ionospheric correction information.

Wherein, the ionospheric auxiliary information sent by the network side to the user equipment can be obtained through at least one of the following ways:
through configuration (background or network management configuration);
through a ground station in a connected satellite navigation system;
through satellite navigation message information received by the network side;
through other devices in the network (such as other adjacent base stations or devices which have already obtained the ionospheric information);
in step 603, after receiving the abovementioned ionospheric information, the user equipment performs a corresponding ionospheric time delay correction to realize the positioning operation.

It should also be noted that, in the above embodiments, the network side comprises a base station (e.g. eNB), a control plane/user plane management entity (e.g. MME), and a location service center (e.g. E-SMLC). The network comprises but not limited to the following modes:
GERAN, UMTS, LTE and CDMA.

### The seventh embodiment

The present embodiment provides a user equipment, comprising the following units, and these units are executed by the processor of the user equipment.

The first unit sends an auxiliary positioning information request to the network side, wherein the auxiliary positioning information request carries an indication of providing ionospheric auxiliary information;
in specific applications, the indication of providing the ionospheric auxiliary information in the abovementioned auxiliary positioning information request message can be an indication of providing grid ionospheric auxiliary information, wherein the indication of providing the ionospheric auxiliary information comprises indication information of requesting to carry the ionospheric auxiliary information and/or a range of ionospheric auxiliary information that needs to be carried.

The range of the ionospheric auxiliary information comprises any one or more kinds of the following information:
ionospheric model category;
all or part of the ionospheric information;
general ionospheric information or enhanced ionospheric information;
general-precision auxiliary information or high-precision auxiliary information;
national or regional information;
a latitude and longitude start-end range of a grid or grid-point serial numbers.

It should be noted that, the ionospheric model category of the range of ionospheric auxiliary information comprises at least one of the following:
KLOBUCHAR model, NeQuick model and enhanced model;
wherein the enhanced model refers to a model modified on the basis of an existing ionospheric model and enhanced on time delay correction precision, geographical applicability or effect.

Alternatively, the precision of the general-precision auxiliary information or the high-precision auxiliary information is distinguished via the precision of the ionospheric model, wherein different ionospheric models have different precisions for time delay correction; or
distinguished through a parameter granularity, wherein in the same category of ionospheric information, part of parameters work as low-precision auxiliary information and have a relatively lower ionospheric time delay correction precision; part of parameters work as high-precision auxiliary information and have a relatively higher ionospheric time delay correction precision.

The second unit receives the ionospheric auxiliary information fed back by the network side and performs a corresponding ionospheric time delay correction to realize a positioning operation.

Wherein, the ionospheric auxiliary information fed back by the network side comprises the grid ionospheric correction information.

### The eighth embodiment

The present embodiment provides a network-side device, comprising the following units, and these units are executed by the processor of the network side device:
a first unit, which receives an auxiliary positioning information request initiated by a user equipment;
a second unit, which, according to an indication of providing the ionospheric auxiliary information carried in the auxiliary positioning information request, sends the user equipment an auxiliary positioning information response carrying the corresponding ionospheric auxiliary information.

In specific applications, the indication of providing the ionospheric auxiliary information in the abovementioned auxiliary positioning information request message can be an indication of providing the grid ionospheric auxiliary information.

The abovementioned second unit determines the corresponding ionospheric auxiliary information that needs to be carried in the auxiliary positioning information response according to one or more kinds of the following information:
a user permission of the user equipment, geographic information of the user equipment, the range of ionospheric auxiliary information, positioning capability supported by the user equipment and history information of user ionospheric parameters saved by the network side.

Wherein, when the range of the ionospheric auxiliary information is the part of the ionospheric information, the network side only sends the high-precision part of the corresponding ionospheric information to the user equipment.

Alternatively, the second unit determines to send the corresponding low-precision or high-precision ionospheric information to the user initiating the auxiliary positioning information request according to the user permission of the user equipment, the geographic information of the user equipment and the history information of the user ionospheric parameters saved by the network side. The second unit may also determine to send the high-precision part of the ionospheric information corresponding to the area where the user is located to the user initiating the auxiliary positioning information request according to the user permission of the user equipment, the geographic information of the user equipment and the latitude and longitude start-end range of the grid or the grid-point serial numbers.

In specific applications, the ionospheric auxiliary information fed back by the network side to the user equipment may comprise the grid ionospheric correction information.

The second unit obtains the ionospheric auxiliary information through one of the following ways and sends it to the user equipment:
through configuration;
through a ground station in a connected satellite navigation system;
through satellite navigation message information received by the second unit;
through other devices in the network

Alternatively, the abovementioned second unit only sends an auxiliary positioning information response carrying the corresponding ionospheric auxiliary information to the user equipment when determining that any of the following conditions is met:
the user who initiates the auxiliary positioning information request having a permission for using the ionospheric information;
the region where the user initiating the auxiliary positioning information request is located providing the ionospheric information;
the region where the user initiating the auxiliary positioning information request is located providing high-precision ionospheric information;
the region where the user initiating the auxiliary positioning information request is located providing low-precision ionospheric information.

The second unit sends a failure response to the user equipment when determining that the user requesting for the auxiliary positioning information does not have the permission for using the ionospheric information or the region where the user is located does not provide the ionospheric information.

It should be noted that, the abovementioned network side comprises but not limited to the following modes:
GERAN, UMTS, LTE and CDMA.

Those ordinarily skilled in the art can understand that all or part of steps of the abovementioned method may be completed by the programs instructing the relevant hardware, and the programs may be stored in a computer-readable storage medium, such as read only memory, magnetic or optical disk. Alternatively, all or some of the steps of the abovementioned embodiments may also be implemented by using one or more integrated circuits. Accordingly, each module/unit in the abovementioned embodiments may be realized in a form of hardware, or in a form of software function modules. The present invention is not limited to any specific form of hardware and software combinations.

The above description is only preferred embodiments of the present invention, and is not used to restrict the protection scope of the present invention. Any changes, equivalent replacements and improvements made within the spirit and principle of the present invention should be included within the protection scope of the present invention.

### Industrial Applicability

The abovementioned technical solution enables the mobile communication network to transfer targeted ionospheric information to the user equipment in a network-aided satellite positioning process, thereby improving the positioning precision. Meanwhile, the abovementioned technical solution saves resources, speeds up the user equipment to lock effective information and finally perform the positioning. The abovementioned technical solution is not limited to Bei Dou satellite positioning scenarios, it can also be applied to other satellite navigation and positioning scenarios. Therefore, the present invention has the very strong industrial applicability.

## Claims

1. A network-aided satellite navigation and positioning method, comprising following steps:
a user equipment sending an auxiliary positioning information request to a network side, wherein the auxiliary positioning information request carries an indication of providing ionospheric auxiliary information;
the user equipment receiving the ionospheric auxiliary information fed back by the network side, performing a corresponding ionospheric time delay correction to realize a positioning operation.

2. The network-aided satellite navigation and positioning method of claim 1, wherein the indication of providing ionospheric auxiliary information comprises one or two kinds of following information:
indication information that requires to carry the ionospheric auxiliary information;
a range of the ionospheric auxiliary information which needs to be carried.

3. The network-aided satellite navigation and positioning method of claim 2, wherein the range of ionospheric auxiliary information comprises any one or more kinds of following information:
ionospheric model category;
all or part of ionospheric information;
general ionospheric information or enhanced ionospheric information;
general-precision auxiliary information or high-precision auxiliary information;
national or regional information;
a latitude and longitude start-end range of a grid or grid-point serial numbers.

4. The network-aided satellite navigation and positioning method of claim 3, wherein,
a precision of the general-precision auxiliary information or the high-precision auxiliary information is distinguished via a precision of ionospheric model, wherein different ionospheric models have different precisions for time delay corrections; or
distinguished via a parameter granularity, wherein in the same category of ionospheric parameters, part of parameters work as low-precision auxiliary information, and part of parameters work as high-precision auxiliary information.

5. The network-aided satellite navigation and positioning method of claim 3, wherein the ionospheric model category comprises at least one of following categories:
a Klobuchar model, a NeQuick model and an enhanced model;
wherein, the enhanced model refers to a model modified on a basis of an existing ionospheric model and enhanced on time delay correction precision, geographical applicability or effect.

6. The network-aided satellite navigation and positioning method of any one of claims 1-5, wherein, the method further comprises:
after receiving the auxiliary positioning information request, the network side sending the user equipment an auxiliary positioning information response carrying the ionospheric auxiliary information according to the indication of providing ionospheric auxiliary information therein.

7. The network-aided satellite navigation and positioning method of claim 6, wherein, the method further comprises:
after receiving the auxiliary positioning information request message and determining that at least one of following conditions are met, the network side sending the auxiliary positioning information response to the user equipment:
a user who initiates the auxiliary positioning information request having a permission for using ionospheric information;
a region where the user initiating the auxiliary positioning information request is located providing ionospheric information;
the region where the user initiating the auxiliary positioning information request is located providing high-precision ionospheric information;
the region where the user initiating the auxiliary positioning information request is located providing low-precision ionospheric information.

8. The network-aided satellite navigation and positioning method of claim 6, wherein, the method further comprises:
after receiving the auxiliary positioning information request message and determining that a user requesting for the auxiliary positioning information does not have a permission for using ionospheric information or a region where the user is located does not provide the ionospheric information, the network side sending a failure response to the user equipment.

9. The network-aided satellite navigation and positioning method of claim 8, wherein, the failure response carries reasons for failure.

10. The network-aided satellite navigation and positioning method of claim 6, wherein, the step of the network side sending the user equipment an auxiliary positioning information response carrying the ionospheric auxiliary information comprises:
according to one or more kinds of following information, the network side determining the ionospheric auxiliary information that needs to be sent to the user equipment: a user permission of the user equipment, geographic information of the user equipment, a range of the ionospheric auxiliary information, a positioning capability supported by the user equipment and history information of user ionospheric parameters saved by the network side;
the network side feeding back an auxiliary positioning information response carrying the determined ionospheric auxiliary information to the user equipment.

11. The network-aided satellite navigation and positioning method of claim 10, wherein, the step of the network side determining the ionospheric auxiliary information that needs to be sent to the user equipment comprises:
when the range of the ionospheric auxiliary information is a part of ionospheric information, the network side determining that the ionospheric auxiliary information which needs to be sent to the user equipment only comprises a high-precision part of the ionospheric information.

12. The network-aided satellite navigation and positioning method of claim 6, wherein,
the ionospheric auxiliary information comprises grid ionospheric correction information.

13. The network-aided satellite navigation and positioning method of claim 6, wherein, before the network side sends the user equipment an auxiliary positioning information response carrying the ionospheric auxiliary information, the network-aided satellite navigation and positioning method further comprises:
the network side obtaining the ionospheric auxiliary information through one of following ways:
through configuration;
through a ground station in a connected satellite navigation system;
through satellite navigation message information received by the network side;
through other devices in a network.

14. A network-aided satellite navigation and positioning method, comprising:
a network side receiving an auxiliary positioning information request, and according to an indication of providing ionospheric auxiliary information in the auxiliary positioning information request, sending an auxiliary positioning information response to a user equipment initiating the auxiliary positioning information request, wherein the auxiliary positioning information response carries the ionospheric auxiliary information.

15. The network-aided satellite navigation and positioning method of claim 14, wherein, the method further comprises:
after receiving the auxiliary positioning information request and determining that a user equipment initiating the auxiliary positioning information request meets one of following conditions or a combination of multiple conditions, the network side sending an auxiliary positioning information response to the user equipment:
a user who initiates the auxiliary positioning information request having a permission for using ionospheric information;
a region where the user initiating the auxiliary positioning information request is located providing ionospheric information;
the region where the user initiating the auxiliary positioning information request is located providing high-precision ionospheric information;
the region where the user initiating the auxiliary positioning information request is located providing low-precision ionospheric information.

16. The network-aided satellite navigation and positioning method of claim 14 or 15, wherein, the method further comprises:
after receiving the auxiliary positioning information request message and determining that a user requesting for the auxiliary positioning information does not have a permission for using the ionospheric information or a region where the user is located does not provide the ionospheric information, the network side sending a failure response to the user equipment.

17. The network-aided satellite navigation and positioning method of claim 16, wherein the failure response carries reasons for failure.

18. The network-aided satellite navigation and positioning method of claim 14 or 15, wherein, the step of the network side sending an auxiliary positioning information response to the user equipment that initiates the auxiliary positioning information request comprises:
according to one or more kinds of following information, the network side determining the ionospheric auxiliary information that needs to be sent to the user equipment:
a user permission of the user equipment, geographic information of the user equipment, a range of the ionospheric auxiliary information, a positioning capability supported by the user equipment and history information of user ionospheric parameters saved by the network side.

19. The network-aided satellite navigation and positioning method of claim 18, wherein, the step of the network side determining the ionospheric auxiliary information that needs to be sent to the user equipment comprises:
when the range of ionospheric auxiliary information is a part of ionospheric information, the network side determining that the ionospheric auxiliary information that needs to be sent to the user equipment only comprises a high-precision part of ionospheric information.

20. The network-aided satellite navigation and positioning method of claim 14, wherein,
the ionospheric auxiliary information comprises grid ionospheric correction information.

21. The network-aided satellite navigation and positioning method of claim 14 or 15, wherein, before the network side sends the user equipment an auxiliary positioning information response carrying the ionospheric auxiliary information, the method further comprises:
the network side obtaining the ionospheric auxiliary information through one of following ways:
through configuration;
through a ground station in a connected satellite navigation system;
through satellite navigation message information received by the network side;
through other devices in a network.

22. A user equipment, comprising a first unit and a second unit, wherein:
the first unit is configured to: send an auxiliary positioning information request to a network side, wherein the auxiliary positioning information request carries an indication of providing ionospheric auxiliary information;
the second unit is configured to: receive the ionospheric auxiliary information fed back by the network side, perform a corresponding ionospheric time delay correction to achieve a positioning operation.

23. The user equipment of claim 22, wherein, the indication of providing the ionospheric auxiliary information comprises one or two kinds of following information:
indication information that requires to carry the ionospheric auxiliary information;
a range of the ionospheric auxiliary information which needs to be carried.

24. The user equipment of claim 23, wherein the range of ionospheric auxiliary information comprises any one or more kinds of following information:
ionospheric model category;
all or part of ionospheric information;
general ionospheric information or enhanced ionospheric information;
general-precision auxiliary information or high-precision auxiliary information;
national or regional information;
a latitude and longitude start-end range of a grid or grid-point serial numbers.

25. The user equipment of claim 24, wherein,
a precision of the general-precision auxiliary information or the high-precision auxiliary information is distinguished via a precision of ionospheric model, wherein different ionospheric models have different precisions for time delay correction; or
distinguished through a parameter granularity, wherein in the same category of ionospheric parameters, part of parameters work as low-precision auxiliary information, and part of parameters work as high-precision auxiliary information.

26. The user equipment of any one of claims 22 to 25, wherein, the ionospheric model category comprises at least one of following categories:
a Klobuchar model, a NeQuick model and an enhanced model;
wherein, the enhanced model refers to a model modified on a basis of an existing ionospheric model and enhanced on time delay correction precision, geographical applicability or effect.

27. A network-side device, comprising a first unit and a second unit, wherein:
the first unit is configured to: receive an auxiliary positioning information request initiated by a user equipment;
the second unit is configured to: according to an indication of providing ionospheric auxiliary information carried in the auxiliary positioning information request, send the user equipment an auxiliary positioning information response carrying the ionospheric auxiliary information.

28. The network side device of claim 27, wherein, the second unit is further configured to:
when determining that any of following conditions or a combination of several conditions is met, send the auxiliary positioning information response to the user equipment.
a user who initiates the auxiliary positioning information request having a permission for using ionospheric information;
a region where the user initiating the auxiliary positioning information request is located providing ionospheric information;
the region where the user initiating the auxiliary positioning information request is located providing high-precision ionospheric information;
the region where the user initiating the auxiliary positioning information request is located providing low-precision ionospheric information.

29. The network side device of claim 27, wherein, the second unit is further configured to:
when determining that a user requesting for the auxiliary positioning information does not have a permission for using ionospheric information or a region where the user is located does not provide the ionospheric information, send a failure response to the user equipment.

30. The network side device of any one of claims 27 to 29, wherein, the second unit is configured to: according to one or more kinds of following information, determine the ionospheric auxiliary information that needs to be sent to the user equipment:
a user permission of the user equipment, geographic information of the user equipment, a range of the ionospheric auxiliary information, a positioning capability supported by the user equipment and history information of user ionospheric parameters saved by the network side.

31. The network side device of claim 30, wherein, the second unit is configured to:
when the range of ionospheric auxiliary information is a part of ionospheric information, determine that the ionospheric auxiliary information that needs to be sent to the user equipment only comprises a high-precision part of the ionospheric information.

32. The network side device of claim 27, wherein, the second unit is configured to obtain the ionospheric auxiliary information through one of following ways:
through configuration;
through a ground station in a connected satellite navigation system;
through satellite navigation message information received by the second unit;
through other devices in a network.
